# DEMANDE DE BREVET EUROPEEN

(11) **EP 0 549 453 A1**
(43) Date de publication de la demande: **30.06.1993**
(21) Numéro de dépôt: 92403507.4
(22) Date de dépôt: 21.12.1992
(51) Int. Cl.: B25J 17/02, B23P 19/00

(54) **Dispositif formant interface mécanique interposée entre l'extrémité d'un robot et un outil de travail du robot**

(30) Priorité: 23.12.1991 FR 9116049
(71) Demandeur: AUTOMOBILES PEUGEOT, F-75116 Paris (FR); AUTOMOBILES CITROEN, F-92200 Neuilly sur Seine (FR)
(72) Inventeur: Dos Santos, Françis, F-94400 Vitry Sur Seine (FR)
(74) Mandataire: Thinat, Michel

(57) **Abrégé**

La présente invention concerne un dispositif formant interface mécanique interposée entre l'extrémité (4) d'un robot et un outil de travail (3) de celui-ci.

Ce dispositif est caractérisé en ce qu'il est agencé de façon à comporter deux degrés de liberté en translation selon deux directions (X, Y) perpendiculaires à une direction nominale (Z) et trois degrés de liberté en rotation autour de ces trois directions (X, Y, Z).

L'invention trouve application dans le domaine de la robotique.

## Description

La présente invention concerne un dispositif formant interface mécanique interposée entre un premier élément, tel que l'extrémité d'un robot et un second élément, tel qu'un outil de travail du robot.

Un tel dispositif est utilisé pour réaliser tout type d'assemblage pouvant nécessiter un désaxage entre des éléments à assembler et un moyen industriel utilisé, par exemple entre l'extrémité d'un robot et son outil.

A cet effet, le dispositif formant interface mécanique interposée entre un premier élément, tel que l'extrémité d'un robot et un second élément, tel qu'un outil de travail du robot, pouvant être désaxé par rapport à une direction nominale, est caractérisé en ce qu'il est agencé de façon à comporter deux degrés de liberté en translation selon deux directions perpendiculaires à la direction nominale et trois degrés de liberté en rotation autour de ces trois directions.

De préférence, le dispositif comprend un organe formant croisillon dont les quatre bras peuvent coulisser respectivement sur quatre paliers disposés orthogonalement selon deux directions correspondant aux deux degrés de liberté en translation précités et dont deux paliers coaxiaux sont fixés au premier élément et les deux autres paliers coaxiaux sont fixés sur un élément intermédiaire de façon à également permettre un pivotement relatif entre le premier élément et l'élément intermédiaire selon deux degrés de liberté en rotation autour des deux directions orthogonales.

L'élément intermédiaire précité comprend, solidaire de celui-ci, un axe perpendiculaire au plan contenant l'organe formant croisillon et sur lequel est monté pivotant selon le troisième degré de liberté en rotation le second élément précité.

Le dispositif comprend un premier mécanisme à mouvement commandé pouvant occuper relativement au premier élément deux positions respectivement de suppression du pivotement relatif entre le premier élément et l'élément intermédiaire selon les deux degrés de liberté en rotation précités et de libération de ce pivotement ; un deuxième mécanisme à mouvement commandé pouvant occuper relativement au premier élément deux positions respectivement de suppression du déplacement relatif entre le premier élément et l'élément intermédiaire selon les deux directions correspondant aux deux degrés de liberté en translation et de libération de ce déplacement relatif ; et un troisième mécanisme à mouvement commandé pouvant occuper relativement au second élément deux positions respectivement de blocage en rotation autour de la direction nominale du second élément et de déblocage de ce dernier.

De préférence, le premier mécanisme précité comprend un plateau à billes monté coulissant sur l'élément intermédiaire perpendiculairement au plan contenant l'organe formant croisillon et propre à prendre appui sur le premier élément par l'intermédiaire des billes de manière à supprimer le pivotement relatif entre le premier élément et l'élément intermédiaire autour des bras de l'organe formant croisillon.

Le moyen de commande du premier mécanisme précité comprend un vérin, de préférence pneumatique, fixé à une plaque solidaire de l'élément intermédiaire par l'intermédiaire de colonnes et dont la tige de vérin agit sur un axe cylindrique solidaire du plateau à billes et monté coulissant dans l'élément intermédiaire par l'intermédiaire d'une bague auto-lubrifiée fixée dans un manchon solidaire de l'élément intermédiaire.

De préférence, le deuxième mécanisme précité comprend un pion monté coulissant sur l'élément intermédiaire selon une direction perpendiculaire au plan contenant l'organe formant croisillon et ayant une extrémité conique propre à s'engager dans un alésage conique du premier élément de manière à supprimer tout déplacement relatif en translation suivant les deux directions précitées entre le premier élément et l'élément intermédiaire.

Le moyen de commande du deuxième mécanisme précité comprend un vérin, de préférence pneumatique, fixé à la plaque précitée et dont la tige de vérin est mécaniquement accouplée au pion précité qui coulisse dans une bague auto-lubrifiée fixée dans un manchon solidaire de la plaque intermédiaire.

De préférence, le troisième mécanisme précité comprend un pion monté coulissant sur la plaque précitée selon une direction perpendiculaire au plan contenant l'organe formant croisillon et ayant une extrémité conique propre à s'engager dans un alésage conique du second élément de manière à l'immobiliser en rotation.

Le moyen de commande du troisième mécanisme précité comprend un vérin, de préférence pneumatique, fixé à l'élément intermédiaire et dont la tige de vérin est mécaniquement accouplée au pion précité qui est monté coulissant dans une bague auto-lubrifiée fixée dans un manchon solidaire de la plaque précitée.

Les premier et deuxième mécanismes précités constituent des moyens de blocage à une position initiale du premier élément relativement à l'élément intermédiaire correspondant à un désaxage nul de ces éléments par rapport à la direction nominale précitée.

Le plateau à billes est immobilisé en rotation relativement à l'élément intermédiaire par une vis solidaire du plateau à billes et s'engageant dans un perçage correspondant de l'élément intermédiaire.

Avantageusement, les billes de la plaque à billes précitée viennent en appui sur une une plaque anti-friction fixée au premier élément précité.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention, et dans lesquels:

La figure 1 est une vue en coupe longitudinale du dispositif formant interface conforme à l'invention.

La figure 2 est une vue en coupe suivant la ligne II-II de la figure 1.

La figure 3 est une vue en coupe suivant la ligne III-III de la figure 2.

La figure 4 est une vue en coupe suivant la ligne IV-IV de la figure 1.

La figure 5 est une vue en coupe suivant la ligne V-V de la figure 1.

La figure 6 représente l'application du dispositif formant interface de l'invention à la dépose d'une pièce sur des éléments récepteurs.

La figure 7 est une vue de dessus suivant la flèche VII de la pièce représentée en figure 6.

Les figures 8a à 8d sont des vues de côté suivant la flèche VIII de la figure 6 représentant différentes étapes d'assemblage de la pièce aux éléments récepteurs.

Le dispositif formant interface mécanique de l'invention va être décrit dans son application à un robot muni de son outil de travail, étant bien entendu que ce dispositif peut être utilisé avec tout autre moyen industriel qu'un robot pour réaliser tout type d'assemblage nécessitant un désaxage entre des éléments à assembler et le moyen industriel utilisé.

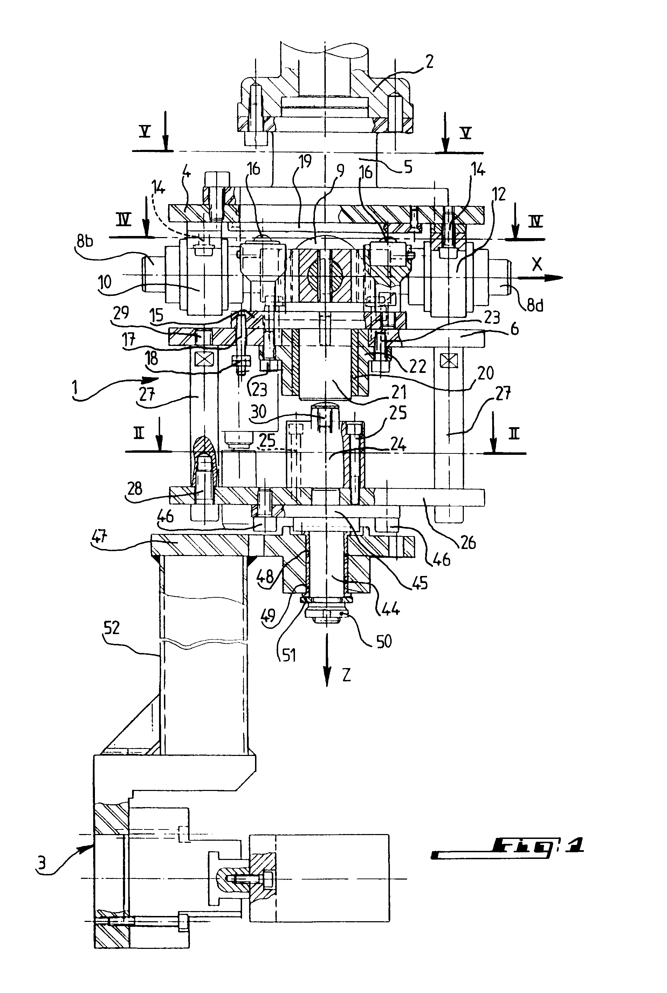

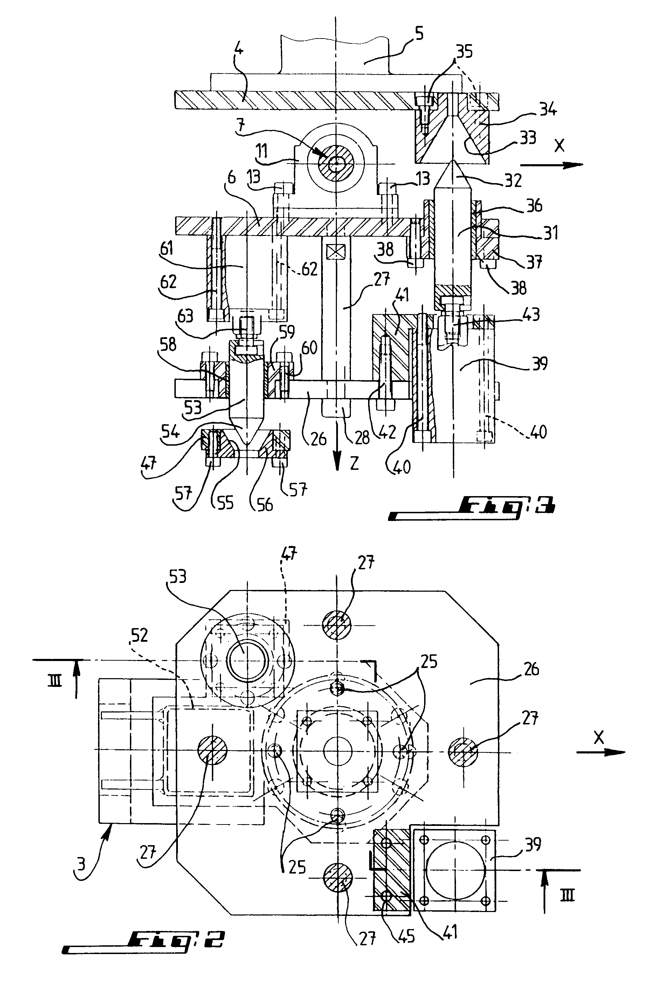

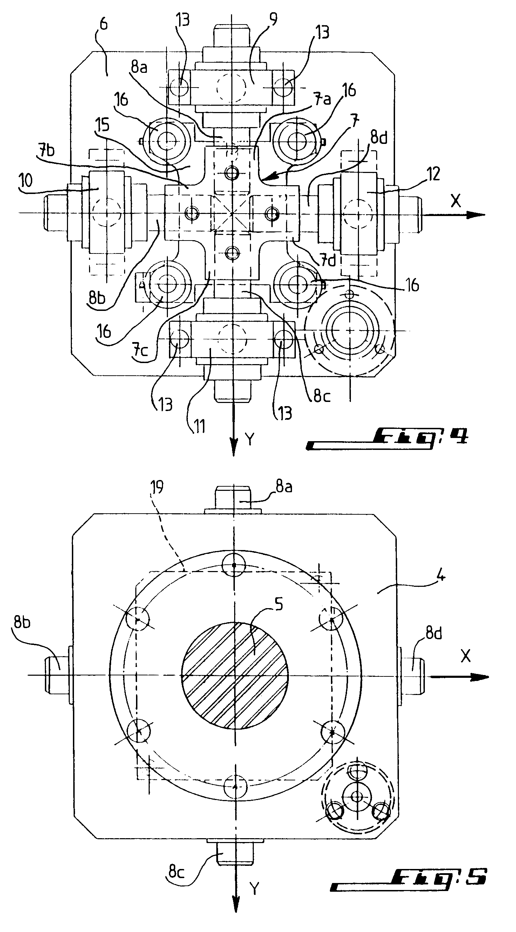

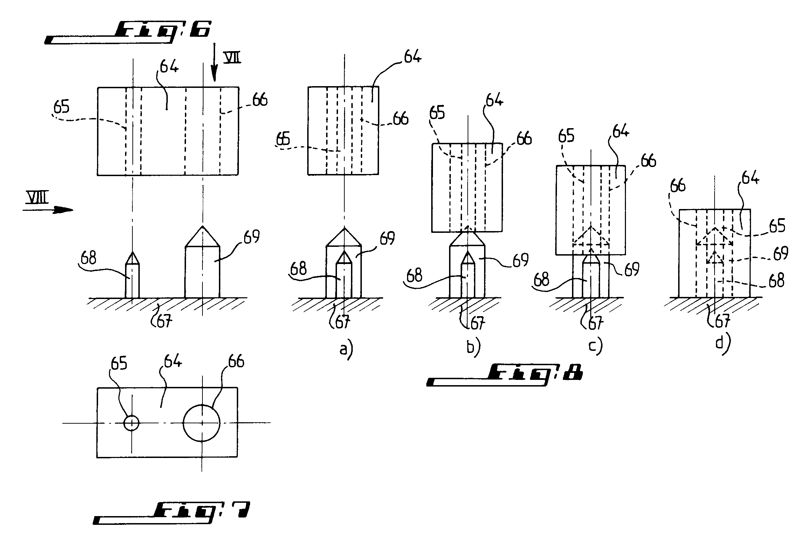

En se reportant aux figures 1 à 5, le dispositif formant interface 1 est interposé entre un robot, dont seul le nez 2 est représenté, et un outil de travail de celui-ci constitué dans le cas présent par une pince 3 à mors de préhension de pièces à assembler. La pince de préhension 3 est déjà connue en soi et n'a donc pas à être détaillée.

Plus précisément, le dispositif formant interface 1 est fixé à un élément en forme de plaque 4 lui-même fixé au nez 2 du robot par l'intermédiaire d'une entretoise 5.

Le dispositif 1 comprend un élément intermédiaire en forme de plaque 6 pouvant avoir relativement à l'élément 4 deux degrés de liberté en translation suivant deux directions X et Y perpendiculaires à une direction nominale Z et deux degrés de liberté en rotation autour des deux directions X et Y.

A cet effet, le dispositif comprend un organe formant croisillon 7, dont les quatre bras 7a-7d sont chacun en forme de manchon recevant un axe 8a-8d fixé dans celui-ci. Les quatre axes 8a-8d peuvent coulisser respectivement dans quatre paliers 9-12 disposés orthogonalement selon les deux directions X et Y correspondant aux deux degrés de liberté en translation sus-mentionnés. Les deux paliers coaxiaux opposés 9 et 11 sont fixés à l'aide de vis de fixation 13 sur la face supérieure de l'élément intermédiaire 6 tandis que les deux autres paliers coaxiaux 10 et 12 sont fixés par des vis de fixation 14 à la face inférieure de l'élément 4.

Le dispositif comprend de plus un premier mécanisme à mouvement commandé permettant de supprimer ou d'interdir le pivotement relatif entre l'élément 4 et l'élément intermédiaire 6 selon les deux degrés de liberté en rotation autour des deux directions X et Y. Ce mécanisme comprend un plateau 15 à quatre billes 16 disposées sensiblement aux quatre coins du plateau 15 qui est monté coulissant sur l'élément intermédiaire 6 perpendiculairement à un plan contenant l'organe formant croisillon 7 et propre à prendre appui sous l'élément 4 par l'intermédiaire des billes 16 qui empêchent ainsi en position active élevée du plateau 15 toute rotation relative de l'élément 4 et de l'élément intermédiaire 6 autour des axes 8a-8d de l'organe formant croisillon 7. Le plateau à billes 15 est bloqué en rotation relativement à l'élément intermédiaire 6 par l'intermédiaire d'une vis 17 fixée dans le plateau 15 et traversant un perçage correspondant de l'élément intermédiaire 6. La vis 17 comporte deux écrous 18 formant butée de limitation de la course du plateau 15 vers l'élément 4. Ce dernier comporte une plaque anti-friction 19 fixée sous celui-ci sur laquelle viennent en appui les quatre billes 16 du plateau 15. Le coulissement du plateau 15 est assuré par une bague auto-lubrifiée 20 dans laquelle coulisse un axe cylindrique 21 solidaire de la plaque 15 perpendiculairement à celle-ci, la bague 20 étant fixée dans un manchon 22 lui-même fixé sous l'élément intermédiaire 6 par des vis de fixation 23. Le moyen commandant le coulissement du plateau 15 comprend un vérin 24, de préférence pneumatique fixé, par des vis de fixation 25, sur une plaque 26 parallèle à l'élément intermédiaire 6 et solidarisée à ce dernier par quatre colonnes 27 fixées perpendiculairement à la plaque 26 et à l'élément intermédiaire 6 par un ensemble de vis de fixation 28 et d'embouts filetés 29 solidaires des extrémités des colonnes 27. Le vérin 24 a sa tige 30 agissant sur l'extrémité libre inférieure de l'axe cylindrique 21 de façon à déplacer le plateau 15 vers l'élément 4 relativement à l'élément intermédiaire 6.

Un deuxième mécanisme à mouvement commandé est prévu pour supprimer ou interdire les deux degrés de liberté en translation suivant les directions X et Y entre l'élément 4 et l'élément intermédiaire 6. Ce mécanisme comprend un pion cylindrique 31 monté coulissant sur l'élément intermédiaire 6 selon une direction perpendiculaire au plan contenant l'organe formant croisillon 7 et ayant une extrémité conique 32 pouvant s'engager dans un alésage conique 33 usiné dans une pièce rapportée 34 fixée à l'élément 4 par des vis de fixation 35, le pion 31 étant monté coulissant dans une bague auto-lubrifiée 36 fixée dans un manchon 37 solidaire de l'élément intermédiaire 6 par des vis de fixation 38. Le moyen de commande du déplacement du pion 31 est assuré par un vérin 39, de préférence pneumatique, fixé par des vis de fixation 40 à une pièce en équerre 41 solidaire de la plaque 26 par des vis de fixation 42 dont une seule est représentée. La tige 43 du vérin 39 est mécaniquement accouplée à l'extrémité du pion 31 opposée à son extrémité conique 32 pour assurer le déplacement du pion 31 dans l'alésage conique 33 et ainsi empêcher tout déplacement relatif en translation de l'élément 4 et de l'élément intermédiaire 6 suivant les deux directions X et Y.

On comprend de ce qui précède que lorsque les deux tiges 30 et 43 des vérins 24 et 39 sont rentrées, tous les mouvements relatifs en translation et en rotation suivant et autour des directions X et Y de l'élément 4 et de l'élément intermédiaire 6 sont possibles. Lorsque seule la tige 30 du vérin 24 est sortie, le plateau 15 est en contact par l'intermédiaire de ses billes 16 sous l'élément 4 de façon à interdire toute rotation relative autour des directions X et Y de l'élément 4 par rapport à l'élément intermédiaire 6, seules les translations de ces éléments suivant les directions X et Y étant autorisées. Lorsque les deux tiges 30 et 43 des vérins 24 et 39 sont sorties, le plateau à billes 15 est en appui sur l'élément 4 et le pion 31 est engagé dans l'alésage conique 33. Dans ce cas, tout déplacement relatif aussi bien en translation qu'en rotation de l'élément 4 par rapport à l'élément intermédiaire 6 est empêché et le dispositif est alors initialisé, c'est-à-dire aucun désaxage relativement à la direction nominale Z n'est possible. L'amplitude de déplacement de l'élément intermédiaire 6 par rapport à l'élément 4 est de plus ou moins 15 mm suivant la direction X ou Y et l'orientation possible relative de ces deux éléments autour des directions X et Y est d'environ 15 degrés. Bien entendu, le diamètre de l'orifice circulaire d'entrée de l'alésage conique 33 est déterminé de façon à permettre l'initialisation du dispositif formant interface lorsque l'élément intermédiaire 6 et l'élément 4 ont été déplacés et/ou orientés relativement l'un à l'autre dans les limites extrêmes susmentionnées.

La plaque 26 supporte un axe 44 perpendiculaire au plan contenant l'organe formant croisillon 7 et coaxial à la direction Z. Cet axe est solidaire d'une embase 45 fixée sous la plaque 26 par des vis de fixation 46. Un élément généralement en forme de plaque 47 est monté rotatif autour de l'axe 44 par l'intermédiaire de deux bagues auto-lubrifiées coaxiales 48 et 49 fixées dans la plaque 47 qui est solidaire en translation de l'axe 44 par l'intermédiaire d'un écrou à ergot 50 et d'une rondelle associée 51. La plaque 47 forme avec un barreau à section transversale carrée 52, qui lui est fixé à son extrémité supérieure par soudage, un module de support de la pince 3 de façon que la pince 3 puisse tourner autour de l'axe 44.

Le dispositif comprend également un troisième mécanisme à mouvement commandé permettant le blocage en rotation de la plaque 47 relativement à l'axe 44. Ce mécanisme comprend un pion 53 monté coulissant sur la plaque 26 selon une direction perpendiculaire au plan contenant l'organe formant croisillon 7 et ayant une extrémité conique 54 pouvant s'engager dans un alésage conique correspondant 55 usiné dans une pièce rapportée 56 fixée à l'élément en forme de plaque 47 par des vis de fixation 57. Le pion 53 est monté coulissant dans une bague auto-lubrifiée 58 fixée dans un manchon 59 solidaire par des vis de fixation 60 de la plaque 26. Le moyen de commande du déplacement du pion 53 est assuré par un vérin 61, de préférence pneumatique, fixé sous l'élément intermédiaire 6 par des vis de fixation 62 et dont la tige 63 est mécaniquement accouplée à l'extrémité du pion 53 opposée à son extrémité conique 54.

Lorsque la tige 63 du vérin 61 est rentrée, l'élément 47 peut librement tourner autour de l'axe 44 et lorsque le vérin est piloté, la tige 63 est sortie pour déplacer en translation le pion 53 qui se centre dans l'alésage conique 55, bloquant ainsi en rotation l'élément 47 relativement à l'axe 44 en une position initiale.

Un exemple d'application du dispositif formant interface de l'invention va être maintenant décrit en référence aux figures 6 à 8.

Le dispositif 1 doit saisir par la pince 3 une pièce 64 munie de deux alésages 65, 66 de diamètres différents devant être assemblée sur un support 67 sur lequel sont rapportés deux pions de centrage 68 et 69.

En position initialisée du dispositif 1, les trois vérins 24, 39 et 61 ont leurs tiges 30, 43 et 63 en position sortie de sorte que l'élément 4 et l'élément intermédiaire 6 sont bloqués en translation suivant les directions X et Y et en rotation autour de ces directions tandis que l'élément 47 est bloqué en rotation autour de l'axe 44 et donc de la direction Z. Ceci permet de combatre les efforts d'inertie appliqués au dispositif lors du déplacement du robot.

Le dispositif 1 s'approche de la pièce à saisir 64 avec la pince 3 ouverte. La pièce 64 est positionnée non référencée sur un présentoir prévu à cet effet. De ce fait, pour saisir la pièce 64 à l'aide de la pince 3, il faut libérer les deux degrés de liberté en translation suivant les deux directions X et Y de l'élément intermédiaire 6 relativement à l'élément 4 en pilotant le vérin 39 de façon à rentrer la tige 43 et désengager ainsi l'extrémité conique 32 du pion 31 de l'alésage conique correspondant 33. On s'affranchit ainsi des décalages de position possibles entre la pince 3, la pièce 64 et le robot porteur. La pièce 64 est ensuite saisie puis dégagée de son présentoir.

Dès que ces opérations sont effectuées, le vérin 39 est de nouveau actionné de façon à bloquer le déplacement en translation suivant les directions X et Y de l'élément 4 et de l'élément intermédiaire 6 et ce pour éviter de soumettre le dispositif à des contraintes de chocs mécaniques pendant le déplacement du robot jusqu'à la position au-dessus des deux pions de centrage de réception 68, 69 comme cela est représenté aux figures 6 et 8a.

Le robot, par l'intermédiaire de sa pince 3, descend la pièce 64 jusqu'à la position définie en figure 8b à laquelle la pointe du pion de centrage 69 de plus grande hauteur est dans l'alésage de plus grand diamètre 66 de la pièce 64. Le vérin 39 est alors piloté pour désengager le pion 31 de l'alésage conique 33 et autoriser ainsi toute translation suivant les directions X et Y de l'élément intermédiaire 6 relativement à l'élément 4. Les erreurs de positions éventuelles sont ainsi rattrapées.

Ensuite, le robot atteint la position définie en figure 8c où le deuxième pion de centrage 68 pénètre dans le deuxième alésage 65. Dans ce cas, des couples mécaniques vont se manifester lors de l'insertion progressive de la pièce 64 dans les deux pions de centrage 68, 69, de même que vont se manifester des efforts de coincement qui deviennent de plus en plus importants. En conséquence, il est nécessaire de libérer les rotations autour des directions X et Y de l'élément intermédiaire 6 relativement à l'élément 4 en désengageant à l'aide du vérin 24 le plateau à billes 15 de l'élément 4 ainsi que de libérer en rotation l'élément 47 autour de l'axe 44 en désengageant à l'aide du vérin 61 le pion 63 de l'alésage conique 55 afin de vaincre les effets de couple antagonistes.

La dépose de la pièce 64 comme représenté en figure 8d est alors possible puisque tous les mouvements suivant et autour des directions X, Y et Z sont autorisés pour vaincre les efforts transmis au robot porteur.

La pince 3 est alors ouverte pour libérer la pièce 64 et il suffit de verrouiller ou de bloquer de nouveau en translation et en rotation les éléments 4 et 47 et l'élément intermédiaire 6 en pilotant les vérins 61 et 24, puis le vérin 39 pour amener leurs tiges respectives en position de sortie. Un nouveau cycle de travail est alors possible.

Le dispositif conforme à l'invention possède ainsi des moyens assurant des déplacements linéaires suivant un plan X/Y, des rotations autour des directions X et Y du plan X/Y ainsi qu'une rotation autour d'une direction Z normale au plan X/Y et des moyens de pilotage, de préférence pneumatique, commandent ce dispositif en pouvant être sollicités soit simultanément pour réinitialiser le dispositif ou au contraire libérer au maximum les débattements, soit de façon dégradée pour adapter le dispositif selon les besoins.

Ce dispositif trouve son application dans la robotique, mais aussi dans la productique en général.

## Revendications

1. Dispositif formant interface mécanique interposée entre un premier élément (4), tel que l'extrémité d'un robot et un second élément (2, 3), tel qu'un outil de travail du robot, pouvant être désaxé par rapport à une direction nominale (Z), caractérisé en ce qu'il est agencé de façon à comporter deux degrés de liberté en translation selon deux directions (X, Y) perpendiculaires à la direction nominale (Z) et trois degrés de liberté en rotation autour de ces trois directions (X, Y, Z), et en ce qu'il comprend un organe formant croisillon (7) dont les quatre bras (7a-7d, 8a-8d) peuvent coulisser respectivement sur quatre paliers (9-12) disposés orthogonalement selon deux directions correspondant aux deux degrés de liberté en translation précités et dont deux paliers coaxiaux (10, 12) sont fixés au premier élément (4) et les deux autres paliers coaxiaux (9, 11) sont fixés sur un élément intermédiaire (6) de façon à également permettre un pivotement relatif entre le premier élément (4) et l'élément intermédiaire (6) selon deux degrés de liberté en rotation autour des deux directions orthogonales (X, Y).

2. Dispositif selon la revendication 1, caractérisé en ce que l'élément intermédiaire (6) précité comprend, solidaire de celui-ci, un axe (44) perpendiculaire au plan contenant l'organe formant croisillon (7) et sur lequel est monté pivotant selon le troisième degré de liberté en rotation le second élément (2, 3) précité.

3. Dispositif selon la revendication 1 ou 2, caractérisé en ce qu'il comprend un premier mécanisme à mouvement commandé pouvant occuper relativement au premier élément (4) deux positions respectivement de suppression du pivotement relatif entre le premier élément (4) et l'élément intermédiaire (6) selon les deux degrés de liberté en rotation précités et de libération de ce pivotement ; un deuxième mécanisme à mouvement commandé pouvant occuper relativement au premier élément (4) deux positions respectivement de suppression du déplacement relatif entre le premier élément (4) et l'élément intermédiaire (6) selon les deux directions correspondant aux deux degrés de liberté en translation et de libération de ce déplacement relatif ; et un troisième mécanisme à mouvement commandé pouvant occuper relativement au second élément (2, 3) deux positions respectivement de blocage en rotation autour de la direction nominale (Z) du second élément (2, 3) et de déblocage de ce dernier.

4. Dispositif selon la revendication 3, caractérisé en ce que le premier mécanisme précité comprend un plateau (15) à billes (16) monté coulissant sur l'élément intermédiaire (6) perpendiculairement au plan contenant l'organe formant croisillon (7) et propre à prendre appui sur le premier élément (4) par l'intermédiaire des billes (16) du plateau (15) de manière à supprimer le pivotement relatif entre le premier élément (4) et l'élément intermédiaire (6) autour des bras de l'organe formant croisillon (7).

5. Dispositif selon la revendication 3 ou 4, caractérisé en ce que le moyen de commande du premier mécanisme précité comprend un vérin (24), de préférence pneumatique, fixé à une plaque (26) solidaire de l'élément intermédiaire (6) par l'intermédiaire de colonnes (27) et dont la tige de vérin (30) agit sur un axe cylindrique (21) solidaire du plateau à billes (15) et monté coulissant dans l'élément intermédiaire (6) par l'intermédiaire d'une bague auto-lubrifiée (20) fixée dans un manchon (22) solidaire de l'élément intermédiaire (6).

6. Dispositif selon l'une des revendications 3 à 5, caractérisé en ce que le deuxième mécanisme précité comprend un pion (31) monté coulissant sur l'élément intermédiaire (6) selon une direction perpendiculaire au plan contenant l'organe formant croisillon (7) et ayant une extrémité conique (32) propre à s'engager dans un alésage conique (33) du premier élément (4) de manière à supprimer tout déplacement relatif en translation suivant les deux directions (X, Y) précitées entre le premier élément (4) et l'élément intermédiaire (6).

7. Dispositif selon la revendication 6, caractérisé en ce que le moyen de commande du deuxième mécanisme comprend un vérin (39), de préférence pneumatique, fixé à la plaque (26) précitée et dont la tige de vérin (43) est mécaniquement accouplée au pion (31) précité qui coulisse dans une bague auto-lubrifiée (36) fixée dans un manchon (37) solidaire de la plaque intermédiaire (6).

8. Dispositif selon l'une des revendications 3 à 7, caractérisé en ce que le troisième mécanisme précité comprend un pion (53) monté coulissant sur la plaque (26) précitée selon une direction perpendiculaire au plan contenant l'organe formant croisillon (7) et ayant une extrémité conique (54) propre à s'engager dans un alésage conique (55) du second élément (2, 3) de manière à l'immobiliser en rotation.

9. Dispositif selon la revendication 8, caractérisé en ce que le moyen de commande du troisième mécanisme précité comprend un vérin (61), de préférence pneumatique, fixé à l'élément intermédiaire (6) et dont la tige de vérin (63) est mécaniquement accouplée au pion (53) précité qui est monté coulissant dans une bague auto-lubrifiée (58) fixée dans un manchon (59) solidaire de la plaque (26) précitée.

10. Dispositif selon l'une des revendications précédentes, caractérisé en ce que les premier et deuxième mécanismes précités constituent des moyens de blocage à une position initiale du premier élément (4) relativement à l'élément intermédiaire (6) correspondant à un désaxage nul de ces éléments (4, 6) par rapport à la direction nominale (Z) précitée.

11. Dispositif selon la revendication 4, caractérisé en ce que le plateau à billes (15) est immobilisé en rotation relativement à l'élément intermédiaire (6) par une vis (17) solidaire du plateau à billes (15) et s'engageant dans un perçage correspondant de l'élément intermédiaire (6).

12. Dispositif selon les revendications 4 à 11, caractérisé en ce que les billes (16) du plateau à billes (15) précité viennent en appui sur une plaque anti-friction (19) fixée au premier élément (4) précité.

13. Dispositif selon les revendications 2 et 5, caractérisé en ce que l'axe (44) est fixé perpendiculairement à la plaque (26) précitée.

14. Dispositif selon les revendications 1 à 13, caractérisé en ce que, dans le cas où le premier élément (4) est l'extrémité d'un robot, cette dernière comprend une plaque (4), à laquelle est fixée la plaque anti-friction (19) précitée, fixée au nez (2) du robot par l'intermédiaire d'une entretoise (5) et en ce que l'outil de travail (2, 3) du robot comporte une pince de préhension (3) d'une pièce (64) et de dépose de celle-ci à une position définie.
